(19) Europäisches Patentamt
European Patent Office
Office européen des brevets

(11) **EP 3 712 859 A1**

(12) **EUROPÄISCHE PATENTANMELDUNG**

(43) Veröffentlichungstag:
**23.09.2020 Patentblatt 2020/39**

(51) Int Cl.:
*G07B 17/00* *(2006.01)* *G06F 1/16* *(2006.01)*

(21) Anmeldenummer: **20173140.3**

(22) Anmeldetag: **02.05.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **03.05.2018 DE 202018102463 U**
**30.04.2019 DE 102019003221**

(62) Dokumentnummer(n) der früheren Anmeldung(en) nach Art. 76 EPÜ:
**19172287.5 / 3 564 910**

(71) Anmelder: **Francotyp-Postalia GmbH**
**13089 Berlin (DE)**

(72) Erfinder:
• **Von der Waydbrink, Karsten**
  **14482 Potsdam (DE)**
• **Schilling, Tilmann**
  **10243 Berlin (DE)**
• **Lorenzen, Matthias**
  **12357 Berlin (DE)**
• **Ortmann, Axel**
  **13189 Berlin (DE)**
• **Muhl, Wolfgang**
  **16540 Hohen Neuendorf (DE)**
• **Krumholz, Wolf-Alexander**
  **16761 Hennigsdorf (DE)**

Bemerkungen:
Diese Anmeldung ist am 06.05.2020 als Teilanmeldung zu der unter INID-Code 62 erwähnten Anmeldung eingereicht worden.

(54) **VERFAHREN ZUR ERMITTLUNG DER NEIGUNG EINES SCHWENKBAREN DISPLAYS**

(57) Verfahren zur Ermittlung der Neigung eines Bauteils, das mit einer Verarbeitungseinheit eines Geräts elektrisch verbunden ist, gekennzeichnet durch die Schritte,
- Vorsehen eines Neigungssensors an einem verstellbaren Bauteil, das um eine x-Achse eines kartesischen Koordinatensystems drehbar ist, wobei der Neigungssensor mindestens in Richtung der z-Achse und der y-Achse jeweils einen Messwertgeber aufweist, wobei der Neigungssensor einen digitalen Messwert jeweils für jede Achse an die Verarbeitungseinheit ausgibt,
- Verarbeiten der beiden digitalen Messwerte in der Verarbeitungseinheit, wobei ein gültiger Messwert für die Neigung des Bauteils aus den digitalen Messwerten abgeleitet wird und
- Speicherung des abgeleiteten Messwerts für die Neigung des Bauteils in dem Gerät.

Fig.3

Detail A

EP 3 712 859 A1

**Beschreibung**

Die Erfindung betrifft ein Verfahren zur Ermittlung der Neigung eines schwenkbaren Displays gemäß dem Oberbegriff des Patentanspruchs 1. Das Verfahren kann beispielsweise bei einem Gutverarbeitungsgerät mit einem schwenkbaren Display angewandt werden.

Das Gutverarbeitungsgerät ist mit einer Tintendruckvorrichtung zur Erzeugung von Abdrucken auf Druckträgern, einer Steuereinheit und Ein- und Ausgabemitteln ausgestattet. Die Tintendruckvorrichtung besteht aus einem Druckmodul, einem Transportmodul für Druckträger, einem Andruckmodul zum Andrücken der Druckträger an das Transportmodul. Das Gutverarbeitungsgerät ist beispielsweise eine smarte Frankiermaschine und das Ein- und Ausgabemittel ein schwenkbares Display.

Wenn nachfolgend von einem Druckträger gesprochen wird, sollen dadurch nicht andere Druckmedien, wie flache Güter, Poststücke, Briefkuverts, Postkarten und dergleichen davon ausgeschlossen werden, in einem druckenden Gutverarbeitungsgerät verarbeitet zu werden, welches die beanspruchten erfinderischen Merkmale aufweist. Der Druckträger wird während des Druckens in Transportrichtung transportiert.

Mit der Jetmail wurde bereits im Jahre 1997 eine Frankiermaschine vorgestellt, die mit einem großflächigen Display ausgestattet ist, wobei die Feldeinteilung der Schirmbilder variabel ist, siehe EP 718 801 B1 (unser Zeichen 8409-EP). Über eine Menü-Taste wird das Hauptmenü aufgerufen, welches eine Auflistung mehrerer Grundmenüs darstellt, zu welchen durch eine Benutzereingabe direkt verzweigt wird. Ein weiterer Hardkey dient zur Auswahl des gewünschten Grundmenüs, wobei die Auswahl entweder mittels einer Enter-Taste bestätigt werden oder mittels einer weiteren Taste (Hardkey) verändert werden kann. Die Schirmbilder der einzelnen Grundmenüs enthalten eine Aufteilung in Felder variabler Größe, wobei den Feldern Softkeys zugeordnet sind, damit der Benutzer eine weitere Auswahl oder Parametereinstellung vornehmen kann. Das Userinterface ist insgesamt sehr voluminös ausgestaltet.

Bekannt ist auch eine Anordnung einer Folientastatur unterhalb des Displays eines Sinclair ZX81-Heimcomputers des britischen Herstellers Sinclair Research Ltd.

Ein Softkey ähnelt somit einer Schaltfläche eines Smart Phones, mit dem Unterschied, dass eine reale Taste außerhalb des Bildschirms verwendet wird. Bei Smart Phones und ähnlichen Kommunikationsgeräten sind Displays mit einem Rand und randlose Displays (Samsung Galaxy Edge) gebräuchlich. Weitere Eingabemittel können bei letzterem nur noch in der Gehäusekante eines Kommunikationsgeräts untergebracht werden.

Eine Frankiermaschine des Typs Postbase der Anmelderin ist bereits mit einem Touchscreen als Ein- und Ausgabemittel ausgestattet. Ein Touchscreen ist ein berührungsempfindliches Display, mit dem Eingaben durch Berührung und Ausgaben durch Anzeigen eines Menue- und/oder Schirmbildes ermöglicht werden.

Aus dem deutschen Gebrauchsmuster DE 20 2010 000 898 U1 ist ein Postbearbeitungsgerät mit einem Display bekannt. Das Display ist in einem Displaygehäuse untergebracht, das manuell verstellbar ist, so dass der Betrachtungswinkel des Displays veränderbar ist. Das Displaygehäuse weist eine Fensteröffnung auf, durch welche ein Touchscreen sichtbar und berührbar ist, um Eingaben zu tätigen. Das Postbearbeitungsgerät weist ein Betätigungsmittel zum Umschalten zwischen Feststellbarkeit und Bewegbarkeit des Displaygehäuses, ein entriegelbares bzw. freigebbares Arretiermittel und ein elektromechanisches oder mechanisches Auslösemittel auf, wobei das Betätigungsmittel auf das Auslösemittel einwirkt, um das Arretiermittel zu entriegeln, zu lösen oder freizugeben, damit das Displaygehäuse im Postbearbeitungsgerät bewegbar ist. Bei Betätigung des Betätigungsmittels (Druck-Taste) wird eine Druckfeder zusammengedrückt und das Arretiermittel gelangt außer Eingriff mit dem Displaygehäuse. Als Alternative wurde in dem deutschen Gebrauchsmuster auch schon eine motorische Verstellung der Neigung des Displays vorgeschlagen. Eine Schnecke eines Schneckengetriebes wird von einem Motor angetrieben, der von einer Steuerung über Ansteuerleitungen angesteuert wird. Die Steuerung ist mit einem Schalter über elektrische Leitungen verbunden, wobei der Schalter zum Beispiel durch ein Betätigungsmittel (Taste) eingeschaltet wird, was die Steuerung entsprechend interpretiert. Ein fest arretiertes Display darf keinem zu starken Druck bei einer Eingabe durch einen Finger eines Bedieners ausgesetzt werden, da entweder das Displaygehäuse bewegt und das Schneckengetriebe beschädigt oder zumindest der Neigungswinkel des Displays ungewollt verändert würde, was dessen Betrachtung erschwert. Das Display ist in nachteiliger Weise nur in groben Stufen schwenkbar. Bei einem Lösen der Arretierung wird durch Federkraft ein Ausgangszustand der Neigung eingestellt, der meist nicht der gewünschten Neigung entspricht.

Es liegt also beispielsweise ein Gutverarbeitungsgerät vor, dessen Displaygehäuse um eine Drehachse schwenkbar ist, wobei der Neigungswinkel des Displays gesteuert durch eine Steuereinheit motorisch und manuell verstellbar ist.

Die Aufgabe besteht darin, Daten zu ermitteln, die dem Winkel eines Bauteils, insbesondere eines Displays eines Gutverarbeitungsgeräts entsprechen, um diese zu speichern.

Der Neigungswinkel kann nach dem Stand der Technik mit den Messdaten z.B. eines Neigungssensors (=Beschleunigungssensor) unter Anwendung von trigonometrischen Funktionen berechnet werden. Durch die Nichtlinearität der trigonometrischen Funktionen, erhält man aber in den Wendepunkten (0°- und 90°-Neigung) bei der Umrechnung sehr ungenaue Werte mit großen Abweichungen bei kleinen Änderungen. Verstärkt wird dieser Effekt durch die Tatsache, dass typische Beschleunigungssensoren nur Werte bis 2 Stellen nach dem Komma ausgeben.

Es soll also eine möglichst genaue Ermittlung der Neigung eines Bauteils, insbesondere eines Displays, aus Beschleunigungswerten des Neigungssensors erreicht werden. Dies soll insbesondere auch im Bereich der Extrema (Wendepunkte bzw. senkrechtes und waagerechtes Display) möglich sein.

Der Benutzer eines Gutverarbeitungsgeräts mit einem schwenkbaren Display mit den erfindungsgemäßen Merkmalen kann so durch eine Eingabe am Display eine Neigung einstellen, die für die Anwendungssituation für ihn optimal ist. Durch die ermittelten Daten kann so ein für den Benutzer optimaler Betrachtungswinkel festgestellt werden. Die so ermittelten Werte können durch die Abspeicherung später wieder reproduziert werden. Der Neigungswinkel soll dabei möglichst genau bestimmt werden.

Bei einem Gutverarbeitungsgerät mit schwenkbarem Display soll so die Ermittlung des aktuellen Neigungswinkels ermöglicht werden. Dieser Wert soll dann später abrufbar sein. Dadurch soll der ermittelte Neigungswinkel des Displays zum Beispiel durch Eingabe durch den Benutzer, beim Starten oder AusschaltVorgang des Gutverarbeitungsgerätes ansteuerbar sein. Der Benutzer muss das Display nicht mehr manuell schwenken. Zudem schwenkt das Display motorisch angetrieben dadurch immer auf die Position, die identisch ist mit dem zuvor ermittelten Neigungswert.

Die Aufgabe wird mit den Merkmalen des Gutverarbeitungsgeräts nach dem Patentanspruch 1 gelöst.

Das Gutverarbeitungsgerät mit dem schwenkbaren Display, worauf das erfindungsgemäße beispielsweise Verfahren angewendet werden kann, ist mit einer Tintendruckvorrichtung zur Erzeugung von Abdrucken auf Druckträgern, einer Steuereinheit und Ein- und Ausgabemitteln ausgestattet. Ein Displaymodul weist einen Displaymodulträger, einen schwenkbaren Displayhalter und ein Displaygehäuse auf, wobei ein Displayrand um einen Displaybildschirm angeordnet ist und ein Displaygehäuserahmen den Displayrand umgibt. Mindestens ein zusätzliches Betätigungsmittel des Displaymoduls ist vorgesehen, um ein motorisches Schwenken des Displaybildschirms manuell auszulösen. Das zusätzliche Betätigungsmittel kann beispielsweise auf dem Displayrand angeordnet werden.

Es ist vorgesehen, dass die Steuereinheit einen Prozessor, einen Programmspeicher, einen Arbeitsspeicher, eine Ein-/Ausgabeschaltung und einen nichtflüchtigen Speicher zur Speicherung von Einstelldaten aufweist, und wobei der Programmspeicher ein Programm zur automatischen Einstellung einer von einem jeweiligen Bediener des Geräts abhängigen Displayneigung aufweist.

Im Displaymodul ist mindestens ein Sensor zur Detektion der Displayneigung, vorzugsweise des Neigungswinkels a, vorgesehen. Eine Horizontale H liegt orthogonal zu einer Transportrichtung x von Druckträgern und erstreckt sich dabei parallel zur y-Richtung.

Der Neigungswinkel $\alpha$ einer auf einer Oberfläche des Displaybildschirms liegenden Neigungsgeraden N zu der Horizontalen H wird in einer bevorzugten Variante der Erfindung zur Definition der Neigung vorgesehen. Damit soll aber nicht ausgeschlossen werden, dass in einer anderen Variante der Erfindung die Neigung des Displays alternativ definiert wird.

Der Sensor und ein Motor sind elektrisch über die Ein-/Ausgabeschaltung mit der Steuereinheit verbunden. Der Displaybildschirm ist elektrisch mit der Steuereinheit verbunden. Der Motor ist zum motorischen Schwenken des Displaybildschirms mit einem selbsthemmenden Getriebe ausgestattet, das die Umdrehungen des Motors untersetzt und über eine Getriebewelle an einen Überlastschutz abgibt, wobei ein Zahnritzel des Überlastschutzes vorgesehen ist, dass mit einem Zahnradteilsegment des schwenkbaren Displayhalters in Eingriff steht.

Weiterhin sind Eingabemittel zur Eingabe von manuellen Eingabedaten, von Sensordaten, von Identitätsmerkmalen bzw. einer persönlichen IdentifikationsNummer (PIN) des Bedieners des Gutverarbeitungsgeräts vorgesehen. Das Display ist ein Bestandteil eines Displaymoduls. Es ist als Touchscreen ausgebildet und dient somit auch als Eingabemittel. Die Eingabemittel des Displays bestehen einerseits aus den jeweils angezeigten Bedienfeldern des Touchscreens und andererseits aus zusätzlichen Betätigungsmitteln, die am Display-Rand ausgebildet sind, wobei die Funktion des zusätzlichen Eingabemittels fest durch eine Symbolbedruckung auf dem Display-Rand vorgegeben ist.

Ein Displaygehäuse oder ein Displayhalter des Displaymoduls ist mit einem

Sensor zur Detektion der Displayneigung, vorzugweise des Neigungswinkels $\alpha$ ausgestattet. Der Sensor ist mit einer Steuereinheit des Gutverarbeitungsgeräts betriebsmäßig verbunden. Das Displaymodul besteht aus einem Displaymodulträger und einem auf diesem schwenkbar montierten Displayhalter mit dem Displaygehäuse. Das Displaygehäuse besteht aus einem Rahmen mit einer Rückwand. Der Displayhalter ist an der Rückwand montiert und weist mechanische Mittel auf, die ein motorisches Verändern des Neigungswinkels der Oberfläche des Displays zu einer Horizontalen ermöglichen. Im Trägerteil des Displaymoduls ist ein Motor mit einem mechanisch gekoppelten Getriebe sowie mit einem Überlastschutz angeordnet. Das Touchscreen-Display ist dadurch automatisch motorisch schwenkbar. Nach Eingabe einer persönlichen Identifikations-Nummer (PIN) oder von Identitätsmerkmalen eines Bedieners des Gutverarbeitungsgeräts wird das Display motorisch geschwenkt bis ein bedienerabhängig vorbestimmter Neigungswinkel erreicht wird. Ein geeigneter Sollwert des Neigungswinkels des Displays, der für einen jeden Benutzer unterschiedlich sein kann, liegt in einem Speicher der Steuereinheit des Gutverarbeitungsgeräts nichtflüchtig gespeichert vor. Das hat den Vorteil, dass nach einem Einschalten der Neigungswinkel des Displays zu einer Horizontalen automatisch und bedienerabhängig eingestellt wird.

Durch die zusätzlichen Betätigungsmittel, die am Display-Rand ausgebildet sind, ist das Display beliebig motorisch schwenkbar. Ein Vorteil besteht im geringen Kraftaufwand zur Bedienung des Geräts über die zusätzlichen Betätigungsmittel. Ein weiterer Vorteil besteht in der feineren Abstufung der VerstellBewegung und somit eines Neigungswinkels einer auf der Oberfläche des Displaybildschirms liegenden Neigungsgeraden innerhalb eines schwenkbaren Bereichs zu einer Horizontalen in y-Richtung.

Per Hand kann der Neigungswinkel des Displays auch manuell weiter verändert werden, wobei der Überlastschutz vorgesehen ist, um das Displaymodul mit motorischer Verstellung vor Beschädigungen zu schützen, die durch ein manuelles Schwenken des Displays bei hoher Krafteinwirkung entstehen könnten. Ein weiterer Vorteil besteht darin, dass eine störende Licht-Reflexion beim Betrachten eines Schirmbildes vermieden werden kann, wobei die Licht-Reflexion von der Oberfläche des Displays ausgeht, weil der Neigungswinkel des Displays innerhalb eines schwenkbaren Bereichs auch manuell weiter verändert werden kann. In Reaktion auf ein Einschalten des Gutverarbeitungsgeräts, beispielsweise der Frankiermaschine, kann die Identität über eine persönliche Identifikationsnummer (PIN) des Bedieners ermittelt und dann das Display des Displaymoduls automatisch in eine definierte Neigungs-Position geschwenkt werden, wobei die Daten dieser Position bereits zuvor erfasst worden sind und von dem Bediener abhängig gespeichert vorliegen. Nach einem Ausschalten des Gutverarbeitungsgeräts bzw. der Frankiermaschine wird das Display der Display-Baugruppe automatisch in eine weitere vorbestimmte Position geschwenkt.

Alternativ kann nach einem Ausschalten des Gutverarbeitungsgeräts bzw. der Frankiermaschine das Display in der letzten Position verbleiben, in welche das Display zuvor geschwenkt worden war.

Es ist Verfahren zur Ermittlung der Neigung eines Bauteils, z.B. dem zuvor genannten Display, das mit einer Verarbeitungseinheit eines Geräts elektrisch verbunden ist, vorgesehen.

Zunächst gibt ein Neigungssensor einen digitalen Messwert jeweils für jede Achse an die Verarbeitungseinheit aus. Der Neigungssensor ist dabei an einem verstellbaren Bauteil vorgesehen, wobei das Bauteil um eine x-Achse eines kartesischen Koordinatensystems drehbar ist, und der Neigungssensor mindestens in Richtung der z-Achse und der y-Achse jeweils einen Messwertgeber aufweist.

Die beiden digitalen Messwerte in der Verarbeitungseinheit werden dann verarbeitet, wobei ein gültiger Messwert für die Neigung des Bauteils aus den digitalen Messwerten abgeleitet wird.

Schließlich wird der abgeleitete Messwerts für die Neigung des Bauteils in dem Gerät abgespeichert.

Die Verarbeitungseinheit kann die Steuereinheit (beispielsweise das Mainboard) eines Gutverarbeitungsgerätes sein. Das verbundene Bauteil kann das Display des Gutverarbeitungsgerätes sein.

Der abgeleitete Messwert kann in einer vorteilhaften Weise für die Neigung des Bauteils aus den beiden digitalen Messwerten berechnet und gespeichert werden, so dass eine Reproduktion der Neigung auch nach einer Verstellung der Neigung des Bauteils von Hand möglich ist.

In einer weiteren vorteilhaften Weise kann in der Verarbeitungseinheit der gültige Messwert für die Neigung des Bauteils in Grad eines Neigungswinkels umgerechnet werden.

In einer weiteren vorteilhaften Weise kann der gültige Messwert für die Neigung des Bauteils mittels einer in einem nichtflüchtigen Speicher gespeicherten Tabelle in Grad eines Neigungswinkels umgesetzt und nichtflüchtig gespeichert werden.

In einer weiteren vorteilhaften Weise kann der gültige Messwert für die Neigung des Bauteils mittels der Verarbeitungseinheit und einer in einem nichtflüchtigen Speicher gespeicherten Formel in Grad eines Neigungswinkels umgerechnet und nichtflüchtig gespeichert werden.

In einer weiteren vorteilhaften Weise kann der gültige Messwert für die Neigung des Bauteils mittels der Verarbeitungseinheit und einer in einem nichtflüchtigen Speicher gespeicherten Formel in Grad eines Neigungswinkels umgerechnet und nichtflüchtig gespeichert werden.

In einer weiteren vorteilhaften Weise ist die Verarbeitungseinheit programmiert, eine Umrechnung der Wirkung der Erdbeschleunigung auf den jeweiligen Messwertgeber in Grad eines Neigungswinkels vorzunehmen.

In einem ersten Ausführungsbeispiel wird die Wirkung der Erdbeschleunigung auf den jeweiligen Messwertgeber gewichtet und dann aus den gewichteten Messwerten ein Mittelwert gebildet.

Dazu kann in vorteilhafter Weise der Mittelwert ein arithmetischer Mittelwert sein.

In einem zweiten Ausführungsbeispiel ist der abgeleitete Messwert für die Neigung des Bauteils, einer der beiden digitalen Messwerte, der die Neigung am genauesten wiedergibt.

Dazu kann in vorteilhafter Weise eine Auswahl zwischen den beiden digitalen Messwerten in der Verarbeitungseinheit erfolgen, wobei die digitalen Messwerte in vorgegebenen Messwertbereichen gültig sind, die zueinander unterschiedlich sind und dass der gültige Messwert für die Neigung des Bauteils in einem nichtflüchtigen Speicher gespeichert wird, so dass eine Reproduktion der Neigung nach einer Verstellung der Neigung des Bauteils möglich ist.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figur näher dargestellt. Es zeigen:

Fig. 1,          perspektivische Darstellung einer Frankiermaschine (als Form eines Gutverarbeitungsgeräts mit montierten Displaymodul von vorn rechts oben,

Fig. 2,          perspektivische Darstellung des Displaymoduls von vorn rechts oben,

Fig. 3,          perspektivische Darstellung des geschnittenen Displaymoduls von hinten, rechts oben, mit einem maximalen Neigungswinkel des Displays,

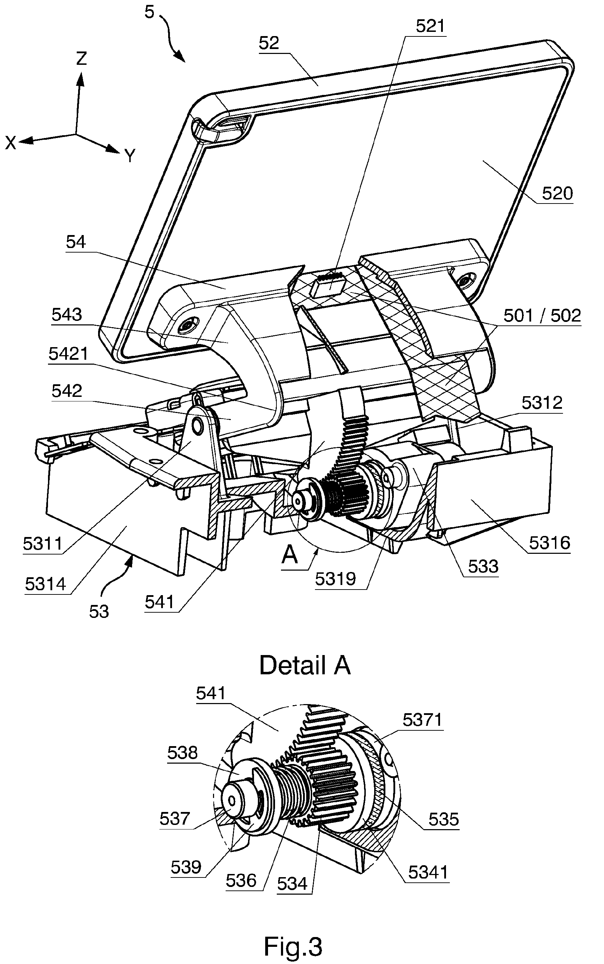

Fig. 3,          perspektivische Darstellung des geschnittenen Displaymoduls von hinten links oben,

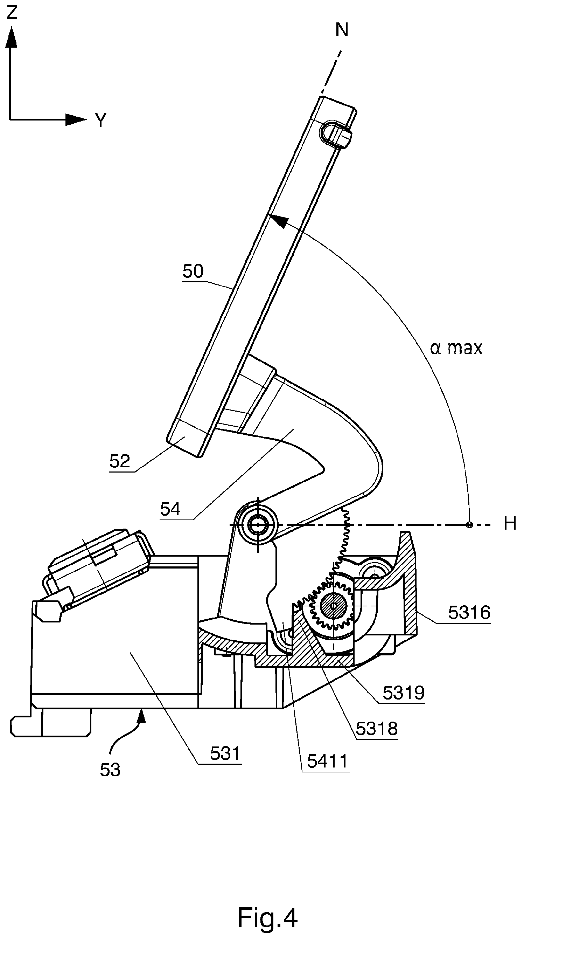

Fig. 4,          Seitenansicht des geschnittenen Displaymoduls von rechts, mit einem maximalen Neigungswinkel des Displays,

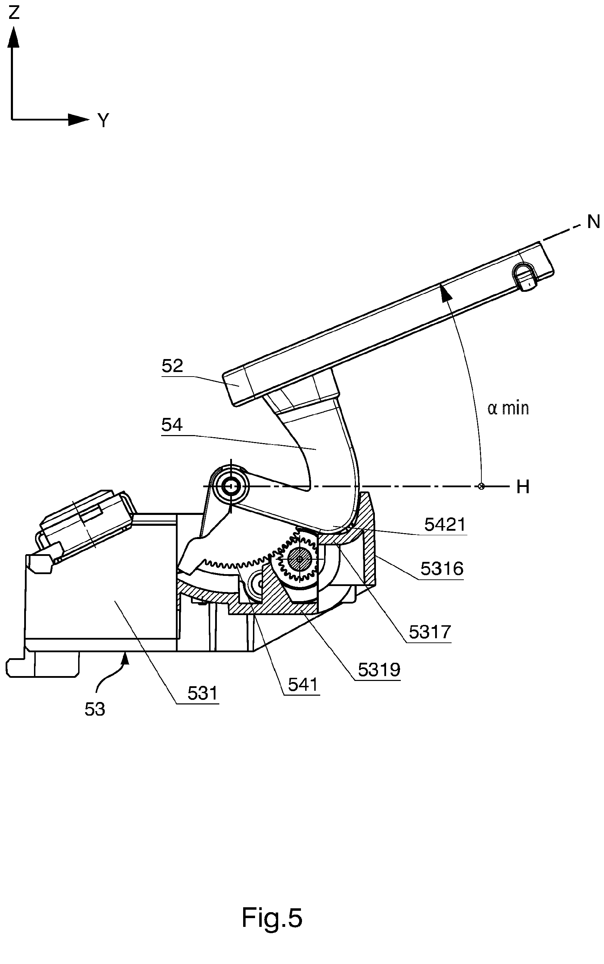

Fig. 5,          Seitenansicht eines geschnittenen Displaymoduls von rechts, mit einem minimalen Neigungswinkel des Displays,

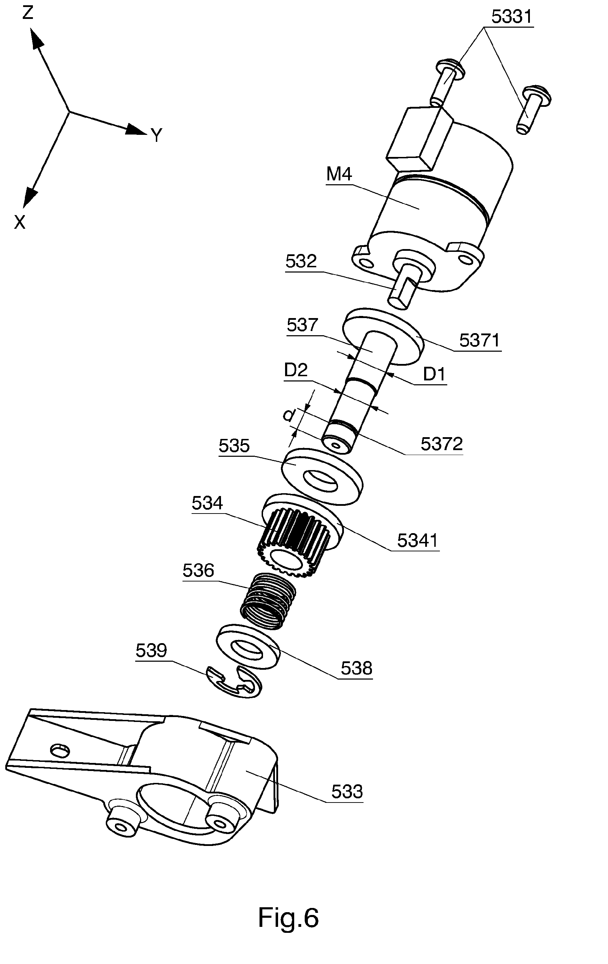

Fig. 6,          perspektivische und geschnittene Darstellung eines Überlastschutzes des Displaymoduls von hinten rechts oben,

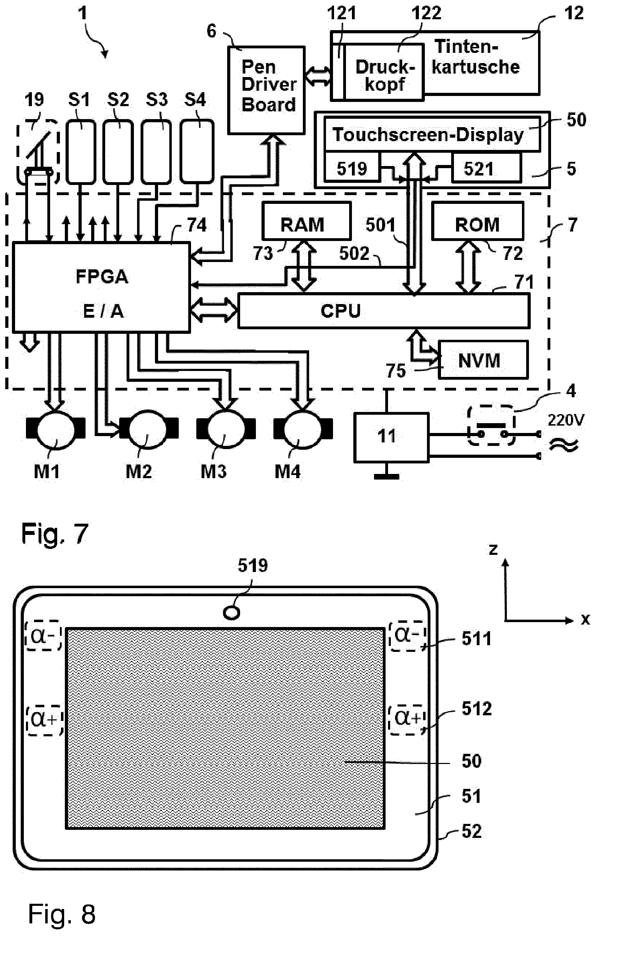

Fig. 7,          vereinfachtes Blockschaltbild einer Steuereinheit,

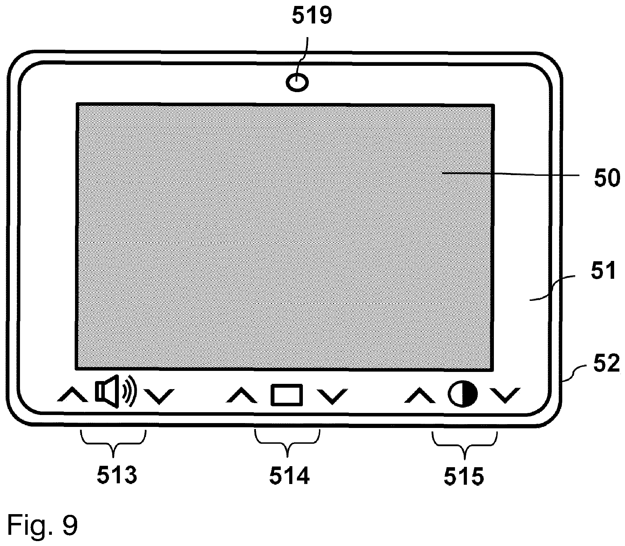

Fig. 8 und 9,    Display mit zusätzlichen Betätigungsmitteln,

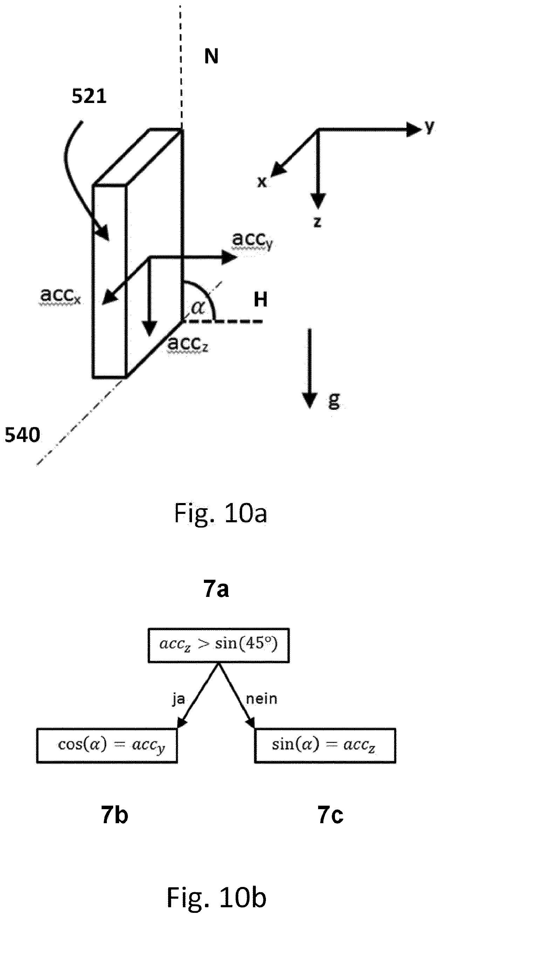

Fig. 10a,        schematische Darstellung eines Neigungssensors,

Fig. 10b,        Darstellung von Auswahlkriterium des zweiten Ausführungsbeispiels,

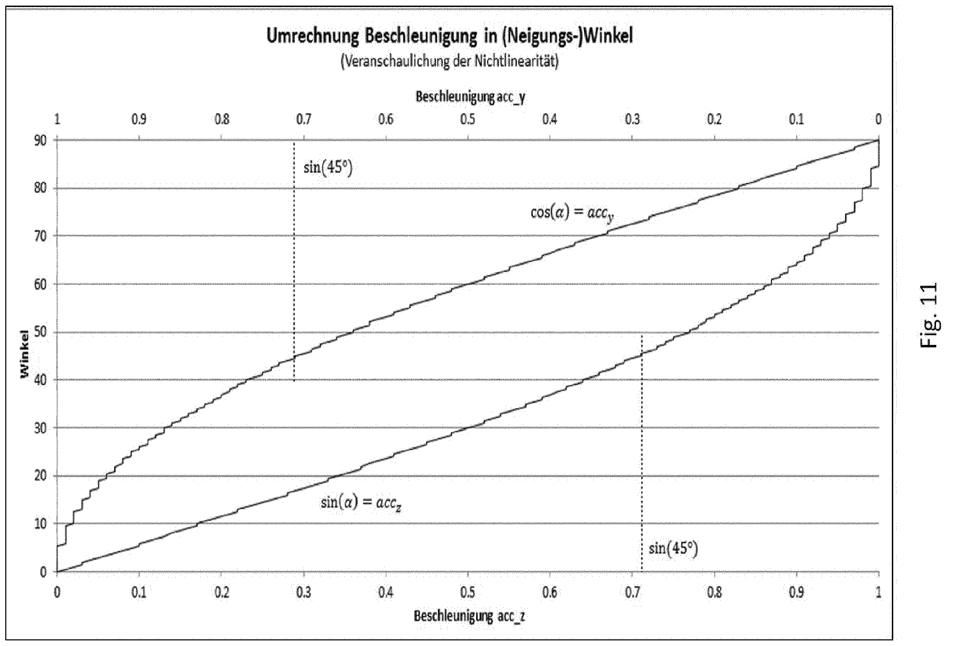

Fig. 11,         grafische Darstellung der Umrechnung der Beschleunigung in (Neigungs-)Winkel.

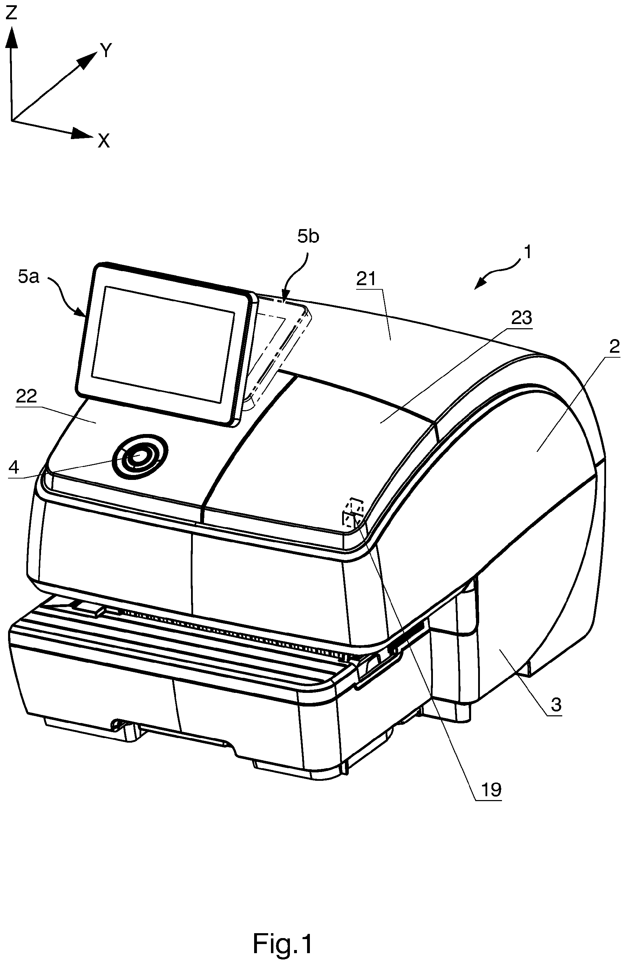

Die Fig. 1 zeigt eine perspektivische Darstellung einer Frankiermaschine 1 mit einem montierten Displaymodul von vorn rechts oben. In einer nicht gezeigten Weise erfolgt ein Transport von Druckträgern in Transportrichtung x eines kartesischen Koordinatensystems innerhalb der Frankiermaschine 1 bzw. eines druckenden Gutverarbeitungsgeräts. Die Frankiermaschine 1 hat eine Gehäuseoberschale 2, die in z-Richtung auf einer Gehäuseunterschale 3 montiert ist. Die Gehäuseoberschale 2 weist eine austauschbare Blende 21 auf der Oberseite der Frankiermaschine 1 nahe einer Rückseite auf, wobei sich die Blende 21 der Länge nach von einer stromaufwärts liegenden Kante bis zu einer stromabwärts liegenden Kante der Oberfläche der Frankiermaschine erstreckt. Die austauschbare Blende 21 hat eine tonnenförmig gewölbte Form und nimmt etwa die Hälfte der Breite der Frankiermaschine ein. Auf der anderen Hälfte sind links vorne eine austauschbare Blende 22 und rechts vorne eine Gehäuseklappe 23 angeordnet. Die Oberfläche der anderen Hälfte der Breite der Frankiermaschine weist einen von der Frontseite beginnenden pultförmigen Anstieg auf, und geht in y-Richtung in die tonnenförmig gewölbte Form der Oberfläche der austauschbaren Blende 21 über. Die austauschbare Blende 22 ist ebenfalls auf der Oberseite gewölbt, annähernd quadratisch und nimmt ca. ein Viertel der gesamten Oberfläche auf der Gehäuseoberschale 2 der Frankiermaschine 1 ein. Die austauschbare Blende 22 reicht von einer Vorderseite der Frankiermaschine 1 bis zur Hälfte der Breite der Oberseite der Frankiermaschine y-Richtung und beginnt stromaufwärts und endet etwa bei der Hälfte der Länge in der Mitte der Frankiermaschine 1. Die austauschbare Blende 22 der Frankiermaschine 1 weist in der Mitte der Hälfte der Länge in x-Richtung und im zweiten Drittel der Hälfte der Breite der Oberseite der Frankiermaschine in y-Richtung eine erste Öffnung auf, die durch ein Display des Displaymoduls verdeckt wird, wobei das Display in z-Richtung durch die erste Öffnung, d.h. nach oben zum Bediener hindurchragt. Die austauschbare Blende 22 weist außerdem in der Mitte der Hälfte der Länge und zwischen der ersten Öffnung und einer Kante der austauschbare Blende 22 an der Vorderseite der Frankiermaschine 1 eine zweite Öffnung auf, durch welche ein Einschalttaster 4 nach oben hindurchragt. Eine Gehäuseklappe 23 ist vorn rechts neben der austauschbaren Blende 22 angeordnet. Unter der geschlossenen Gehäuseklappe 23 ist ein Klappensensor 19 nicht sichtbar angeordnet, der ein Öffnen bzw. Schließen der Gehäuseklappe 23 detektiert.
In der perspektivischen Darstellung liegt "links" eine stromaufwärts liegende Seite (nicht sichtbar) der Frankiermaschine 1 und des Displaygehäuserahmens des Displaymoduls, wobei das Display in einer ersten Position 5a mit einem maximalen Neigungswinkel gezeichnet ist. Außerdem wurde das Display mit einer Strich-Punkt-Linie in einer zweiten Position 5b gezeichnet, wobei das Display einen minimalen Neigungswinkel zu einer Horizontalen aufweist. Der Neigungswinkel des Displays ist innerhalb eines schwenkbaren Bereichs, beispielsweise von 30° bis 80°, veränderbar.

Nach einem Einschalten der Frankiermaschine 1 bzw. des Gutverarbeitungsgeräts wird das Display ausgehend von der zweiten Position 5b gesteuert durch die Steuereinheit mittels eines Motors motorisch in Richtung der ersten Position 5a geschwenkt. Der aktuell erreichte Neigungswinkel wird durch einen Sensor in Zeitabständen gemessen und in der Steuereinheit überwacht. Im Ergebnis wird automatisch ein vorbestimmter Neigungswinkel des Displays zu einer Horizontalen eingestellt, wobei der Istwert des Neigungswinkels einem dem Bediener zugeordnet gespeicherten Sollwert des Neigungswinkels entspricht. Einer Vielzahl von Bedienern können individuell unterschiedliche Neigungswinkel-Sollwerte zugeordnet gespeichert werden, wobei die Neigung des Displays motorisch und/oder manuell korrigiert werden kann. Von einem Bediener kann der gewünschte Neigungswinkel individuell auch via Display manuell eingestellt werden, weil das Display als Touchscreen ausgebildet ist. Ein Schirmbild des Touchscreen-Displays oder der Rand des Displays enthält dafür ein vorbestimmtes Touchscreen-Eingabefeld zur motorischen Verstellung der DisplayNeigung.

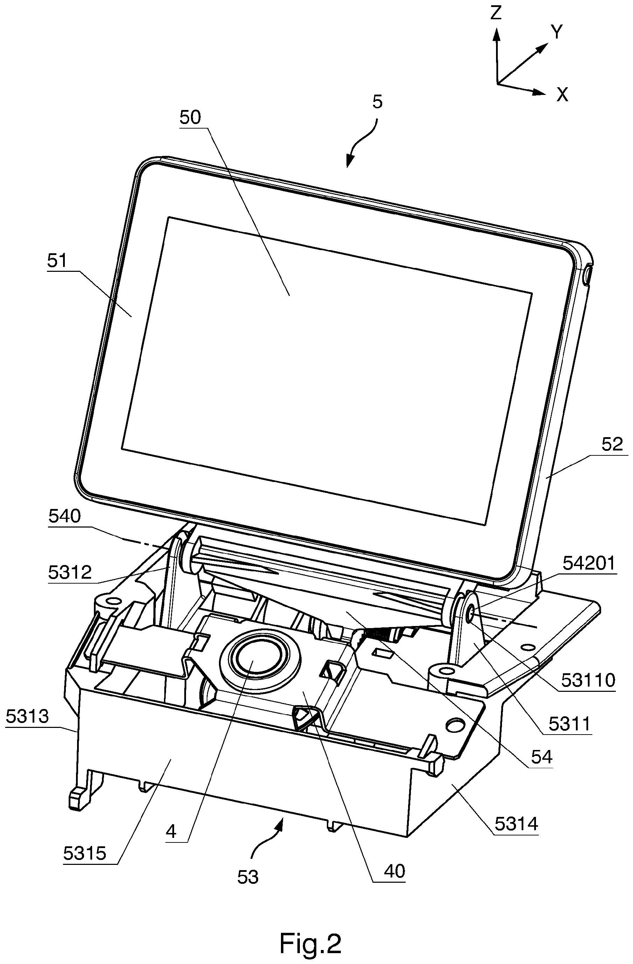

In der Fig. 2 ist eine perspektivische Darstellung des Displaymoduls 5 von vorn rechts oben gezeigt. Auf einem kastenförmigen Displaymodulträger 53 ist ein Displayhalter 54 um eine zur y-Richtung orthogonalen Schwenkachse 540 schwenkbar montiert. An beiden Seitenwänden 5313, 5314 eines Rahmens 5313, 5314, 5315 (5316 verdeckt) des Displaymodulträgers 53 und parallel zur Transportrichtung x ist ein Halteblech 40 für einen Einschalttaster 4 in der Nähe der Vorderseite 5315 des Displaymodulträgers 5 montiert. Das Display weist einen Displayrand 51 um einen Touchscreen-Displaybildschirm 50 sowie einen Displaygehäuserahmen 52 auf, wobei die Rückseite (Fig. 3) des Displaygehäuserahmens 52 an dem Displayhalter 54 montiert ist. Ein Haltelappen 5311 ist stromabwärts an der einen Seitenwand 5314 des Rahmens des Displaymodulträgers 53 montiert und ein Haltelappen 5312 ist stromaufwärts an der anderen Seitenwand 5313 des Rahmens des Displaymodulträgers 53 montiert ist. Beide Haltelappen 5311, 5312 stehen in z-Richtung (nach oben) vom Rahmen ab. In dem jeweilig abstehenden Ende der beiden Haltelappen 5311, 5312 ist jeweils eine Bohrung 53110, (53120 verdeckt) eingearbeitet. Eine Drehachse 540 des Displayhalters 54 verläuft durch die Mitte der beiden Bohrungen. Der Displayhalter 54 weist zwei Drehzapfen 54201, (54202 verdeckt) auf, durch deren Mitte die Drehachse 540 verläuft, wenn der Displayhalter 54 - in der gezeichneten Weise - auf dem Rahmen 5313, 5314, 5315 (5316 verdeckt) des Displaymodulträgers 53 montiert ist.

In der Fig. 3 ist eine perspektivische Darstellung des Displaymoduls 5 von hinten rechts oben, mit einem maximalen Neigungswinkel des Displays gezeigt. Das Displaymodul 5 weist den Rahmen 5314, 5316 (5313, 5315 verdeckt) des Displaymodulträgers 53 und den schwenkbaren Displayhalter 54 auf, der an einer Rückseitenwand 520 des Displaygehäuserahmens 52 montiert ist. Die Rückseitenwand 5316 und die Seitenwand 5314 des Rahmens des Displaymodulträgers 53 und der schwenkbare Displayhalter 54 sind aufgeschnitten gezeichnet, damit mehr Details sichtbar werden. Es ist vorgesehen, dass das Displaygehäuse 52 oder der Displayhalter 54 einen Sensor 521 zur Neigungswinkelermittlung aufweist. Der Sensor 521 ist vorzugsweise unter der Rückseitenwand des Displaygehäuserahmens 52 auf einem flexiblen Bandkabel 502 (oder 501) montiert und ragt in Richtung des schwenkbaren Displayhalters 54 der in seinem Inneren auch die flexiblen Bandkabel 501 und 502 aufnimmt.

Der schwenkbare Displayhalter 54 ist als Winkelhebel geformt, mit einem spitzen Winkel zwischen einem Kraftarm 542 und einem Lastarm 543, wobei zwei äußere Seitenwände an einem Ende eines Kraftarms 542 des Displayhalters 54 je einem Drehzapfen (Fig. 2) aufweisen, die in seitlichen Bohrungen an dem Ende der am Rahmen montierten Lappen 5311, 5312 drehbar gelagert sind und wobei das jeweils andere Ende des Kraftarms 542 in y-Richtung weist und ein Anschlagsknie 5421 aufweist. Der schwenkbare Displayhalter 54 ist innen hohl. Zwei innere Seitenwände sind am jeweils anderen Ende des Kraftarmes 542 und am Lastarm 543 vorgesehen, die einen Hohlraum stromaufwärts und stromabwärts begrenzen, wobei der Hohlraum die flexiblen Bandkabel 501 und 502 aufnimmt. Ein Anschlagsknie 5421 ist an der mindestens einen der äußeren Seitenwände ausgebildet bzw. geformt. Ein nach hinten und unten hervortretendes Zahnradteilsegment 541 ist am jeweils anderen Ende des Kraftarmes 542 in der Mitte eines Abstandes zwischen den beiden inneren Seitenwänden montiert oder angeformt. Der vom Kraftarm 542 abgewinkelte Lastarm 543 des Displayhalters 54 stellt eine mechanische Verbindung einerseits zwischen dem Anschlagsknie 5421 und andererseits dem Displaygehäuse her. Vorzugsweise ist jeweils ein Anschlagsknie 5421 an den beiden äußeren Seitenwänden ausgebildet bzw. geformt, wobei beide Anschlagsknie 5421 spiegelsymmetrisch zur Mitte des Abstandes zwischen den beiden inneren Seitenwänden liegen.

Alternativ ist ein Sensor 521 zur Neigungswinkeldetektion im Innern des Lastarms 543 des Displayhalters 54 angeordnet. An dem Kraftarm 542 des Displayhalters sind beidseitig kreisrunde Lagerzapfen angeformt (Fig.2), durch deren Kreismittelpunkt die Schwenkachse verläuft (Fig.2).

Die Mechanik des Displaymoduls wird durch den Überlastschutz vor Beschädigungen geschützt, die durch ein manuelles Schwenken bei zu hoher Krafteinwirkung entstehen könnten. Der Überlastschutz ist als Reib- oder Rutschkupplung ausgebildet. Ein Motorhalter 533 ist zwischen der Rückseitenwand 5316 des Rahmens und einem Boden 5319 des Displaymodulträgers 53 montiert. Der Motorhalter 533 hält einen Motor M4 (Fig. 6) mit Getriebe in einer vorbestimmten Position, so dass eine Getriebewelle 532 parallel zur Transportrichtung x ausgerichtet ist (Fig. 6). Die Fig. 3 zeigt ein Detail A mit der Rutschkupplung. Das Zahnradteilsegment 541 steht mit einem Zahnritzel 534 in Eingriff. Das Zahnritzel 534 weist einen Kragen 5341 auf, der durch die Federkraft einer Druckfeder 536 eine Reibscheibe 535 an einen Kragen 5371 einer Kupplungswelle 537 presst. Die Kupplungswelle 537 ist auf die Getriebewelle 532 des Motors M4 (Fig. 6) gesteckt und mit letzterer form- und kraftschlüssig verbunden. Das Getriebe ist vorzugsweise ein selbsthemmendes Getriebe. Unter dem Begriff selbsthemmend soll hierbei verstanden werden, dass nur von der Motorseite die Getriebewelle bewegt werden kann und die Displayneigung unverändert bleibt, wenn der Motor nicht angesteuert wird und keine manuelle Verstellung der Displayneigung vorgenommen wird.

Die Fig. 4 zeigt eine Seitenansicht des geschnittenen Displaymoduls von rechts, mit einem maximalen Neigungswinkel des Displays. Die Rückseitenwand 5316 und der Boden 5319 des Rahmens 531 des Displaymodulträgers 53 sind unmittelbar vor dem Zahnradteilsegment 541 geschnitten gezeichnet.

Eine Anschlagsnase 5411 ist vom Zahnradteilsegment 541 abstehend angeordnet und schlägt an eine zweite Anschlagskontur 5318 des Displaymodulträgers an, die am Boden 5319 des Rahmens 531 angeformt ist und in z-Richtung absteht. Der Displayhalter 54 hat den Displaybildschirm 50 in eine extreme Position gedreht, so dass eine Neigungsgerade N, die auf eine nach vorn gerichtete Oberfläche des Displaygehäuserahmens 52 bzw. auf die Oberfläche des Displaybildschirms 50 gelegt ist, in einem maximalen Neigungswinkel $\alpha_{max}$ zu einer Horizontalen H gebracht ist, die einen Drehpunkt der Schwenkachse 540 des Displayhalters 54 schneidet und sich parallel zur y-Richtung erstreckt.

In der Fig. 5 ist eine Seitenansicht einer geschnittenen Displaymoduls von rechts, mit einem minimalen Neigungswinkel des Displays dargestellt. Die Rückseitenwand 5316 und der Boden 5319 des Rahmens 531 des Displaymodulträgers 53 sind unmittelbar vor dem Zahnradteilsegment 541 geschnitten gezeichnet.

Der Displaygehäuserahmen 52 ist gemäß der Fig.5 soweit geschwenkt dargestellt, dass das Anschlagsknie 5421 des Displayhalters eine erste Anschlagskontur 5317 an der Rückseitenwand 5316 des Rahmens 531 des Displaymodulträgers berührt. In dieser Lage liegt die Neigungsgerade N der Oberfläche des Displaybildschirms 50 in einem minimalen Neigungswinkel $\alpha_{min}$ zu einer Horizontalen H die den Drehpunkt der Schwenkachse 540 (Fig. 2) des Displayhalters 54 schneidet und sich parallel zur y-Richtung erstreckt.

Die Fig. 6 zeigt eine perspektivische und gesprengte Darstellung eines Überlastschutzes des Displaymoduls von hinten rechts oben. Der Überlastschutz ist als Einscheiben-Rutschkupplung 534, 535, 536, 537, 538, 539 ausgebildet. Ein Motor M4 weist ein Getriebe auf und kann mittels Schrauben 5331 an dem Motorhalter 533 befestigt werden. Die Kupplungswelle 537 hat an einem Ende eine Steckstelle und kann mittels dieser auf die Getriebewelle 532 des Motors M4 gesteckt und form- und kraftschlüssig verbunden werden. Die Kupplungswelle 537 hat einen Kragen 5371, der rund um die Steckstelle ausgebildet ist, wobei die Steckstelle zum Motor M4 hin ausgerichtet ist. Die Kupplungswelle 537 ist zylindrisch geformt und an einer vom Motor M4 weg gerichteten Stelle abgestuft. Der Durchmesser D1 der Kupplungswelle 537 ist in einem ersten Abschnitt vor der Abstufung größer als der Durchmesser D2 in einem zweiten Abschnitt, der in Transportrichtung x hinter der Abstufung beginnt. In einem kleinen Abstand d von dem anderen vom Motor M4 weg gerichteten Ende weist die Kupplungswelle 537 einen Einstich 5372 auf. Eine zentrale Bohrung des Zahnritzels 534 ist an den Durchmesser D1 angepasst.

Es ist vorgesehen, dass die Druckfeder 536 auf dem zweiten Abschnitt der Kupplungswelle 537 montiert ist, so dass aufgrund der Federkraft der Druckfeder 536 auf eine Stirnseite des Zahnritzels 534 drückt und dadurch ein der Stirnseite gegenüber liegender Kragen 5341 des Zahnritzels 534 die Reibscheibe 535 auf den Kragen 5371 der Kupplungswelle 537 gedrückt wird und dass die Kupplungswelle 537 einen Einstich 5372 für eine Montage der Sicherungsscheibe 539 aufweist.

Der Einstich 5372 an der Kupplungswelle 537 ist für eine Montage der Sicherungsscheibe 539 erforderlich. Zwischen der Sicherungsscheibe 539 und der Druckfeder 536 kann eine Unterlegscheibe 538 auf der Kupplungswelle 537 montiert werden.

Die Fig. 7 zeigt ein vereinfachtes Blockschaltbild einer Steuereinheit 7, mit einer Central Prozessor Unit (CPU) 71, einem Programspeicher (ROM) 72, einem Arbeitsspeicher (RAM) 73, einer Ein-/Ausgabeschaltung 74 und einem nichtflüchtigen Speicher (NVM) 5, welche ebenfalls mit der CPU 71 betriebsmäßig verbunden sind. Die Ein-/Ausgabeschaltung 74 ist vorzugsweise als ein Field Programmable Gate Array (FPGA) realisiert, dass mit einem Einschalter 4, Sensoren S1 bis S4, einer Anzahl an Motoren M1 bis M4 und über ein Pen-Driver-Board 6 mit einem Tintenstrahldruckkopf des Gutverarbeitungsgeräts betriebsmäßig verbunden ist. Der Sensor 521 gibt detektierte Daten über ein flexibles Bandkabel 501 aus und übergibt die detektierten Daten der Steuereinheit 7. Er ist über das flexible Bandkabel 501 elektrisch mit der Ein-/Ausgabeschaltung 74 der Steuereinheit 7 verbunden. Die Steuereinheit 7 ist zur Ausgabe von digitalen Bilddaten über ein flexibles Bandkabel 502 elektrisch mit dem Displaybildschirm 50 verbunden, der die digitalen Bilddaten anzeigt. Die CPU 71 der Steuereinheit ist über die Ein-/ Ausgabeschaltung 74 mit dem Sensor 521 elektrisch verbunden, um den eingestellten Neigungswinkel des Displays zu ermitteln und um anschließend den gewünschten Neigungswinkel über einen Motor elektronisch ansteuern zu können. Ein geeigneter Sensor ist beispielsweise ein Beschleunigungssensor, vorzugsweise ein ultra-low-power high-performance 3-axis "nano" accelerometer. Miniaturisierte Sensoren sind meist mit piezoelektrischen Sensoren oder als MEMS (Micro-Electro-Mechanical System) aufgebaut. Die MEMS werden aus Silicium hergestellt und sind Feder-Masse-Systeme, bei denen die "Federn" nur wenige $\mu$m breite Silicium-Stege sind und auch die Masse aus Silicium hergestellt ist. Durch die Auslenkung bei Beschleunigung kann zwischen dem gefedert aufgehängten Teil und einer festen Bezugselektrode eine Änderung der elektrischen Kapazität gemessen werden. Der gesamte Messbereich entspricht einer Kapazitätsänderung von ca. 1 pF. Die Elektronik zur Auswertung dieser kleinen Kapazitätsänderung wird auf demselben integrierten Schaltkreis (IC) untergebracht. Der Sensor 521 ist vorzugsweise ein Beschleunigungssensor vom Typ LIS3DH. Der LIS3DH ist ein ultra-low-power Hochleistungs-Drei-Achsen-Linear-Beschleunigungssensor mit digitaler I2C/SPI-Schnittstelle. Der Sensor 521 verfügt über energiesparende Betriebsmodi, die erweiterte Energiesparfunktionen und intelligente integrierte Funktionen ermöglichen. Der miniaturisierte Sensor ist als MEMS (Micro-Electro-Mechanical System) aufgebaut und wird auf dem flexiblen Bandkabel 501 montiert und mit ausgewählten Leitungen des flexiblen Bandkabels 501 elektrisch verbunden. Der Sensor wird zusammen mit dem Touchscreen-Display und den flexiblen Bandkabeln 501, 502 in das Displaygehäuse eingebaut und ist elektrisch über das flexible Bandkabel 501 mit der Ein-/ Ausgabeschaltung 74 der Steuereinheit 7 verbunden. Das Touchscreen-Display ist elektrisch über ein flexibles Bandkabel 502 mit der CPU 71 der Steuereinheit 7 verbunden.

Der von dem Beschleunigungssensor in einem jeden Verstellzustand der Neigung des Displays zugehörig gemessene Istwert entspricht dem Neigungswinkel $\alpha$. Er_wird in Zeitabständen von der CPU 71 der Steuereinheit 7 mit einem in dem nicht-flüchtigen Speicher NVM 75 der Steuereinheit des Gutverarbeitungsgeräts nicht-flüchtig gespeicherten Sollwert verglichen, wobei der Sollwert dem gewünschten Neigungswinkel entspricht, um den Motor M4 entsprechend anzusteuern. Als Motor kann beispielsweise ein Gleichstrommotor oder ein Schrittmotor verwendet werden. Der Touchscreen-Displaybildschirm 50 zeigt nach dem Einschalten der Frankiermaschine beliebige Symbole im sichtbaren Bereich des Displays an. Diese visualisierten Symbole können funktional durch eine direkte oder indirekte Berührung aktiviert werden. Zwischen dem Displaygehäuserahmen und dem visualisierbaren Bereich des Displays, also im Randbereich des Displays kann ein fester Bereich mit permanenten Symbolen vorbelegt werden. Solche Symbole sind für Funktionen vorgesehen, die oft, häufig oder immer aktivierbar sein müssen, also aus jedem Bildschirmanzeigemodus heraus. Für ein resistives oder kapazitives Display können solche Bereiche durch Erweiterung des Touchbereiches der auf dem Displaybildschirm liegenden Touchfolie aktiviert werden, ohne das unter dem Displayrand 51 (Fig. 2) eine aktive Anzeigefläche realisiert ist.

Der Vorteil ist eine immer vorhandene Möglichkeit eine bestimmte Funktion (Rücksprungadresse, Home-Menü, Helligkeits-, Lautstärkeregelung, Bewegen des Displays, usw.) zu hinterlegen und egal aus welchem Screen/Modus zu erreichen. Aktiv kann dies durch eine Symbolbedruckung auf dem Glassubstrat des Displayrandes 51 unterstützt oder als Hidden Button ausgeführt werden.

Alternativ zu einem Beschleunigungssensor (Accelometer) kann ebenso ein piezoelektrischer Beschleunigungssensor, ein Drehgeber, ein Winkelsensor mit Hall-Element, ein Lagesensor, ein Kippsensor oder Neigungssensor eingesetzt werden.

Als Eingabemittel zur Eingabe von Identitätsmerkmalen kann ein Fingerprintsensor verwendet werden. Der Fingerprintsensor kann im Touchbereich des Touchscreen-Displays integriert sein.

In der Fig. 8 ist ein Touchscreen-Display mit zusätzlichen Betätigungsmitteln 511 und 512 an der rechten und linken Seite des Displayrands 51 und einem weiteren Sensor 519 an einem oberen Abschnitt des Displayrands 51 dargestellt. Der Displayrand 51 ist mit einer berührungsempfindlichen Folie (Touchfolie) überzogen und wird vom Displaygehäuse 52 eingefasst.

In der Fig. 9 ist ein Display mit zusätzlichen Betätigungsmitteln 513, 514 und 515 an einem unteren Abschnitt des Displayrands 51 dargestellt. Mit dem zusätzlichen Betätigungsmittel 515 kann die Lautstärke einer Wiedergabequelle an die Bedürfnisse des Bedieners angepasst werden. Mit dem zusätzlichen Betätigungsmittel 514 kann die Neigung des Displays an den von einem Bediener gewünschten Betrachtungswinkel des Displaybildschirmes 50 angepasst werden.

Die smarte Frankiermaschine wird in der Bedienung mit dem zusätzlichen Betätigungsmittel 515 und einem weiteren Lichtsensor 519 weiter verbessert, wobei beide Mittel auf dem Displayrand angeordnet sind. Mit dem zusätzlichen Betätigungsmittel 515 kann die Helligkeit der Anzeigen des Displays verändert werden. Das ist auch deshalb vorteilhaft, weil damit Lichtreflexionen überstrahlt werden können und zwar unabhängig von dem jeweils vom Display angezeigten Schirmbild. Die Lichtsensorik gestattet eine automatische Anpassung der Lichtstärke des Displays innerhalb eines Raumwinkels $\Omega$ an die Umgebungslichtstärke.

Alternativ können die zusätzlichen Betätigungsmittel - in nicht gezeigter Weise - auch in einem oberen Abschnitt des Displayrands 51 oder in ausgewählten oder in allen Abschnitten des Displayrands 51 angeordnet werden. Die zusätzlichen Betätigungsmittel 511 - 515 auf dem Displayrand 51 werden erzeugt, indem eine Touchfolie auf den Displayrand 51 aufgelegt wird.

Eine smarte Frankiermaschine kann in einer weiteren Variante mit akustischen Mitteln und einem Sprachassistenten ausgestattet werden, um die Bedienung der Frankiermaschine durch eine Sprachsteuerung weiter zu verbessern, indem der optimale Neigungswinkel des Displays benutzerspezifisch via Sprachsteuerung eingestellt wird.

Fig. 10a ist eine schematische Darstellung eines erfindungsgemäßen Neigungssensors.

Der Neigungssensor kann ein 3-Achsenbeschleunigungssensor wie beispielsweise ein MEMS-Beschleunigungssensor sein.

Bei einer Verwendung eines Neigungssensors können 2 Achsen zur genaueren Berechnung des Neigungswinkels ($\alpha$) und zur Reduzierung von störenden Einflüssen durch mechanische Schwingungen benutzt werden.

Achse 1: orthogonal zur Drehachse und horizontal ($acc_y$), wobei accy der Accelometer-Wert in y-Richtung ist (Fig. 1a).

Achse 2: orthogonal zur Drehachse und vertikal ($acc_z$), wobei accz der Accelometer-Wert in z-Richtung ist (Fig. 1a).

Die dritte Beschleunigungsachse mit dem Accelometer-Wert ($acc_x$) in x-Richtung ist parallel zur Drehachse und wird nicht in die Berechnungen miteinbezogen.

Die beiden genannten Achsen können in der trigonometrischen Tangenz-Funktion verwendet werden.

Angewandt auf einen Beschleunigungssensor mit der Achsenausrichtung wie in der Fig. 10a gezeigt, lautet die Formel:

$$\tan(\alpha) = \frac{acc_z}{acc_y}, acc_y \neq 0$$

Für den Spezialfall $acc_y = 0 \rightarrow \alpha = 90°$ kann die Berechnung nicht angewandt werden. Das kann durch eine Abfrage im Programm sichergestellt werden. Dieser Spezialfall tritt aber in der Regel nicht ein. Die Neigung eines Neigungssensors liegt im Ausführungsbeispiel immer im Winkel zu einer Horizontalen. Der Accelometer-Wert entspricht dem Sinus des Neigungswinkels $\alpha$. Bei dem Spezialfall liegt der Messwert g = 1 in Gravitationsrichtung. Im Ausführungsbeispiel g<1 in Abhängigkeit von der Neigung. Es gilt:

$$Sin(\alpha) = accz / g$$

Das erfindungsgemäße Verfahren soll durch zwei Beispiele verdeutlicht werden:

Gegeben seien bei einem Winkel von ca. 26°:

Achse 1: Beschleunigung $acc_y = 0,9g$

Achse 2: Beschleunigung $acc_z = 0,44g$

$$\text{Dann ergibt } \tan(\alpha) = \frac{acc_z}{acc_y} \rightarrow \arctan\left(\frac{acc_z}{acc_y}\right) = arctan\left(\frac{0,44}{0,9}\right) = 26,05° = \alpha$$

Weiterhin seien bei einem Winkel von ca. 84°:

Achse 1: Beschleunigung $acc_y = 0,1g$

Achsel 2: Beschleunigung $acc_z = 0,99g$

Das Ergebnis ohne Zurhilfenahme beider Beschleunigungsachsen (also in nicht erfindungsgemäßer Weise) am Beispiel mit einem Winkel von ca. 84°, also nur mit der zweiten Beschleunigungsachse $acc_z = 0,44g$ ergibt:

$$\sin(\alpha) = acc_z \rightarrow \arcsin(acc_z) = \arcsin(0,99) = 81,9° = \alpha$$

Das Ergebnis der Berechnung nach dem Stand der Technik weicht um mehr als 2° vom tatsächlichen Wert ab.

Das Ergebnis mit dem erfindungsgemäßen Verfahren ergibt:

$$\tan(\alpha) = \frac{acc_z}{acc_y} \rightarrow \arctan\left(\frac{acc_z}{acc_y}\right) = arctan\left(\frac{0,99}{0,1}\right) = 84,2 = \alpha$$

Daraus wird deutlich, dass die gestellte Aufgabe in einer deutlich genaueren Weise gelöst wird als aus dem Stand der Technik bekannt.

Die trigonometrische Berechnungen, insbesondere des Tangenz, können je nach Prozessor sehr viel Ressourcen und Zeit in Anspruch nehmen. Daher bietet sich diese Ausführungsform für ressourcen- und zeitsensitive Anwendungen an.

Fig. 10b beschreibt das Auswahlkriterium 7a des zweiten Ausführungsbeispiels. Dabei erfolgt eine Auswahl der geeigneteren Beschleunigungsachse in Abhängig der Linearität. Es wird unterschieden zwischen einem ersten Auswahlschritt 7b und einem zweiten Auswahlschritt 7c. Dabei gilt, dass wenn der Accelometer-Wert accz größer als der Sinus von 45° ist, dann wird der Kosinus des Neigungswinkels α verwendet. Ansonsten wird auf den zweiten Accelometer-Wert accz gewechselt und dabei der Sinus des Neigungswinkels α verwendet. Das Auswahlkriterium 7a ist erforderlich, weil die Messung möglichst im linearen Teil der Kurve erfolgen soll (siehe Fig. 11).

Auch bei der dieser Ausführungsform sollen zwei Beispiele das erfindungsgemäßen Verfahren verdeutlichen:

Gegeben seien bei einem Winkel von ca. 26°:

Achse 1: Beschleunigung $acc_y$ = 0,9$g$

Achse 2: Beschleunigung $acc_z$ = 0,44$g$

Dann ergibt

$$acc_z < \sin(45°) \rightarrow \sin(\alpha) = acc_z \rightarrow \arcsin(acc_z) = \arcsin(0{,}44) = 26{,}1° = \alpha$$

Weiterhin seien bei einem Winkel von ca. 84°:

Achse 1: Beschleunigung $acc_y$ = 0,1$g$

Achsel 2: Beschleunigung $acc_z$ = 0,99$g$

Das Ergebnis mit dem erfindungsgemäßen Verfahren nach der in Fig. 11 dargestellten Ausführungsform wäre:

$$acc_z > \sin(45°) \rightarrow \cos(\alpha) = acc_y \rightarrow \arccos(acc_y) = \arccos(0{,}1) = 84{,}3° = \alpha$$

Auch hier wird deutlich, dass die gestellte Aufgabe in einer deutlich genaueren Weise gelöst wird.

Die dargestellten Werte gehen aus der Fig. 11 hervor. Dort wird die Umrechnung der Beschleunigung (Accelometer-Werte) in Neigungswinkel beschrieben.

Die Erfindung ist nicht auf die vorliegend näher erläuterte Ausführungsform beschränkt, da offensichtlich weitere andere Ausführungen der Erfindung entwickelt bzw. eingesetzt werden können, die - vom gleichen Grundgedanken der Erfindung ausgehend - von den anliegenden Patentansprüchen umfasst werden.

**Patentansprüche**

1. Verfahren zur Ermittlung der Neigung eines Bauteils, das mit einer Verarbeitungseinheit eines Geräts elektrisch verbunden ist, **gekennzeichnet durch** die Schritte,

    - Vorsehen eines Neigungssensors an einem verstellbaren Bauteil, das um eine x-Achse eines kartesischen Koordinatensystems drehbar ist, wobei der Neigungssensor mindestens in Richtung der z-Achse und der y-Achse jeweils einen Messwertgeber aufweist, wobei der Neigungssensor einen digitalen Messwert jeweils für jede Achse an die Verarbeitungseinheit ausgibt,
    - Verarbeiten der beiden digitalen Messwerte in der Verarbeitungseinheit, wobei ein gültiger Messwert für die Neigung des Bauteils aus den digitalen Messwerten abgeleitet wird und
    - Speicherung des abgeleiteten Messwerts für die Neigung des Bauteils in dem Gerät.

2. Verfahren, nach Anspruch 1, **gekennzeichnet dadurch, dass** der abgeleitete Messwert für die Neigung des Bauteils, einer der beiden digitalen Messwerte ist, der die Neigung am genauesten wiedergibt.

3. Verfahren, nach Anspruch 2, **gekennzeichnet dadurch, dass** eine Auswahl zwischen den beiden digitalen Messwerten in der Verarbeitungseinheit erfolgt, wobei die digitalen Messwerte in vorgegebenen Messwertbereichen gültig sind, die zueinander unterschiedlich sind und dass der gültige Messwert für die Neigung des Bauteils in einem nichtflüchtigen Speicher gespeichert wird, so dass eine Reproduktion der Neigung nach einer Verstellung der Neigung des Bauteils möglich ist.

4. Verfahren, nach Anspruch 1, **gekennzeichnet dadurch, dass** der abgeleitete Messwert für die Neigung des Bauteils aus den beiden digitalen Messwerten berechnet und gespeichert wird, so dass eine Reproduktion der Neigung nach einer Verstellung der Neigung des Bauteils möglich ist.

5. Verfahren, nach Anspruch 1, **gekennzeichnet dadurch, dass** in der Verarbeitungseinheit der gültige Messwert für die Neigung des Bauteils in Grad eines Neigungswinkels umgerechnet wird.

6. Verfahren, nach Anspruch 1, **gekennzeichnet dadurch, dass** der gültige Messwert für die Neigung des Bauteils mittels einer in einem nichtflüchtigen Speicher gespeicherten Tabelle in Grad eines Neigungswinkels umgesetzt und nichtflüchtig gespeichert wird.

7. Verfahren, nach Anspruch 1, **gekennzeichnet dadurch, dass** der gültige Messwert für die Neigung des Bauteils mittels der Verarbeitungseinheit und einer in einem nichtflüchtigen Speicher gespeicherten Formel in Grad eines Neigungswinkels umgerechnet und nichtflüchtig gespeichert wird.

8. Verfahren, nach Anspruch 1, **gekennzeichnet dadurch, dass** die Verarbeitungseinheit programmiert ist, eine Umrechnung der Wirkung der Erdbeschleunigung auf den jeweiligen Messwertgeber in Grad eines Neigungswinkels vorzunehmen.

9. Verfahren, nach Anspruch 1, **gekennzeichnet dadurch, dass** die Wirkung der Erdbeschleunigung auf den jeweiligen Messwertgeber gewichtet wird und dann aus den gewichteten Messwerten ein Mittelwert gebildet wird.

10. Verfahren, nach Anspruch 9, **gekennzeichnet dadurch, dass** der Mittelwert ein arithmetischer Mittelwert ist.

Fig.1

Fig.2

Detail A

Fig.3

Fig.4

Fig.5

Fig.6

Fig. 7

Fig. 8

Fig. 9

Fig. 10a

**7a**

$$acc_z > \sin(45°)$$

ja    nein

$$\cos(\alpha) = acc_y$$    $$\sin(\alpha) = acc_z$$

**7b**    **7c**

Fig. 10b

Fig. 11

**Europäisches Patentamt**
**European Patent Office**
**Office européen des brevets**

## EUROPÄISCHER RECHERCHENBERICHT

Nummer der Anmeldung

EP 20 17 3140

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2013/141209 A1 (RIHN BERNARD K [US] ET AL) 6. Juni 2013 (2013-06-06) <br> * Zusammenfassung; Abbildung 1 * <br> * Absätze [0016] - [0025] * <br> * Absätze [0030] - [0039] * <br> ----- | 1-10 | INV. <br> G07B17/00 <br> G06F1/16 |
| X | JP 2011 159092 A (BROTHER IND LTD) 18. August 2011 (2011-08-18) <br> * Zusammenfassung; Abbildungen 4,5 * <br> * Absätze [0013] - [0017] * <br> * Absätze [0026] - [0030] * <br> * Absätze [0037] - [0040] * <br> ----- | 1-10 | |
| A | DE 298 22 702 U1 (MEONIC SYS ENG GMBH [DE]) 18. Februar 1999 (1999-02-18) <br> * Zusammenfassung; Ansprüche 1-3 * <br> * Absätze [0006] - [0008] * <br> * Absätze [0019] - [0020] * <br> ----- | 1-10 | |

**RECHERCHIERTE SACHGEBIETE (IPC)**

G07B
G06F
G07G
G07F
H05K

Der vorliegende Recherchenbericht wurde für alle Patentansprüche erstellt

| Recherchenort | Abschlußdatum der Recherche | Prüfer |
|---|---|---|
| Den Haag | 14. Juli 2020 | Pfyffer, Gregor |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 20 17 3140

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-07-2020

| Im Recherchenbericht angeführtes Patentdokument | Datum der Veröffentlichung | Mitglied(er) der Patentfamilie | Datum der Veröffentlichung |
|---|---|---|---|
| US 2013141209 A1 | 06-06-2013 | CN 103218015 A<br>TW 201342014 A<br>TW 201719324 A<br>US 2013141209 A1<br>US 2015192929 A1<br>WO 2013085932 A1 | 24-07-2013<br>16-10-2013<br>01-06-2017<br>06-06-2013<br>09-07-2015<br>13-06-2013 |
| JP 2011159092 A | 18-08-2011 | KEINE | |
| DE 29822702 U1 | 18-02-1999 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 718801 B1

- DE 202010000898 U1